# EUROPÄISCHE PATENTSCHRIFT

(11) **EP 3 846 638 B1**
(45) Veröffentlichungstag und Bekanntmachung des Hinweises auf die Patenterteilung: **08.06.2022**
(21) Anmeldenummer: 20771758.8
(22) Anmeldetag: 16.09.2020
(51) Int. Cl.: B65B 25/00, B65B 25/22, B65B 31/02, B65B 55/08, B65D 77/22, A23L 3/01, A23L 3/015, A23L 3/3445, B65D 81/34

(54) **VERFAHREN ZUM HALTBARMACHEN VON LEBENSMITTELN IN EINER TRANSPORT- UND VERKAUFSVERPACKUNG**
PROCESS FOR PRESERVATION OF FOOD IN A TRANSPORT AND SALES PACKAGING
PROCEDE DE CONSERVATION D'ALIMENTS DANS UN EMBALLAGE DE TRANSPORT ET DE VENTE.

(30) Priorität: 20.09.2019 CH 12012019
(43) Veröffentlichungstag der Anmeldung: 14.07.2021
(73) Patentinhaber: Gigatherm Mikrowellen AG, 9230 Flawil (CH)
(72) Erfinder: KURTZ, Silvia, 9200 Gossau (CH); STURZENEGGER, Martin, 8052 Zürich (CH); FRICK, Dieter, 9247 Henau (CH); APPEL, Gérard, 9404 Rorschacherberg (CH)
(74) Vertreter: Riederer Hasler & Partner Patentanwälte AG
(86) Internationale Anmeldenummer: PCT/CH2020/050008
(87) Internationale Veröffentlichungsnummer: WO 2021/051211

(56) Entgegenhaltungen:
- WO-A1-2006/084402
- WO-A1-2006/109000
- WO-A1-2007/039676
- WO-A1-2016/128556
- CH-A1- 700 481
- FR-A1- 2 643 231
- FR-A1- 2 907 315
- US-A1- 2008 138 474
- US-A1- 2016 355 287

## Beschreibung

### Gebiet der Erfindung

Die Erfindung betrifft ein Verfahren zum Haltbarmachen von Nahrungsmitteln gemäss Oberbegriff des Anspruchs 1.

### Stand der Technik

Aus dem Stand der Technik auf dem Gebiet von Verfahren zum Haltbarmachen von Lebensmitteln ist gemäss der EP 1 845 807 A1 ein Verfahren bekannt bei welchem die Lebensmittel in einer Transport- und Verkaufsverpackung mit Mikrowellen erhitzt werden. Die Verpackung besitzt eine Entlüftungsöffnung. Die Erhitzung ist solange vorzunehmen bis in der Verpackung gebildeter Dampf aus der Entlüftungsöffnung entweicht, wodurch die Lebensmittel pasteurisiert werden. Im Anschluss wird eine Kanüle in die Verpackung gestochen und durch die Kanüle wird ein Gas in die Verpackung injiziert. Dadurch wird verhindert, dass ein Druckabfall entsteht, welcher die Verpackung und dementsprechend auch die darin befindlichen Lebensmittel deformiert. Um den Pasteurisierungseffekt nicht zu verlieren wird zur Injektion ein Schutzgas verwendet, welches den in der Verpackung vorhandenen Sauerstoff und Wasserdampf durch die Entlüftungsöffnung aktiv verdrängt. Ähnliche Verfahren zum Haltbarmachen von Lebensmitteln sind aus der WO 2006/109000 A1 und aus der WO 2016/128556 bekannt. In der WO 2006/109000 A1 wird nach Entlüftung von in der Verpackung gebildetem Dampf durch die Entlüftungsöffnung Schutzgas über dieselbe Öffnung mittels einer Injektionskanüle zugeführt.

Als Nachteil hat sich bei diesem Verfahren herausgestellt, dass durch den zwangsläufig geringen Durchmesser der Kanüle ein geringer Volumenfluss an Schutzgas erreichbar ist. Dadurch dauert es bis zu 20 Sekunden bis der Innenraum der Verpackung mit Schutzgas geflutet ist. Auch kann durch die Verwendung einer Kanüle nicht sichergestellt werden, dass alle in dem Innenraum vorhandenen Toträume zuverlässig von Sauerstoff befreit werden und mit dem injizierten Gas gespült werden.

Ein weiteres Problem bei dem Verfahren ist, dass die Kanüle in das zu verpackende Produkt einstechen kann und das Produkt an der Kanüle haften bleibt. Dadurch können Reste von Produkt an der Nadel hängen bleiben und zum nächsten Produkt übertragen werden. Auch kann die Öffnung der Kanüle durch leichte, aufwirbelnde Partikel, zum Beispiel gehackte Kräuter, verstopft werden.

### Aufgabe der Erfindung

Aus den Nachteilen des beschriebenen Stands der Technik resultiert die Aufgabe das bekannte Verfahren zu verbessern. Insbesondere ist es Ziel der vorliegenden Erfindung ein rascheres und gleichzeitig zuverlässigeres Verfahren zum Haltbarmachen von Lebensmitteln vorzuschlagen.

### Beschreibung

Die Lösung der gestellten Aufgabe gelingt bei einem Verfahren zum Haltbarmachen von Nahrungsmitteln durch die im kennzeichnenden Abschnitt des Patentanspruchs 1 angeführten Merkmale. Weiterbildungen und/oder vorteilhafte Ausführungsvarianten sind Gegenstand der abhängigen Patentansprüche.

Die Erfindung zeichnet sich bevorzugt dadurch aus, dass das Verfahren zum Haltbarmachen von Nahrungsmitteln in einem Behälter mit einer Entlüftungsöffnung, in welchem das Lebensmittel verpackt und verkauft wird, folgende Verfahrensschritte umfasst:
- Das Abfüllen von feuchten Lebensmitteln, welche vorgekocht oder roh sein können,
- das Dampfgaren und Pasteurisieren der Lebensmittel mit Mikrowelle, wobei der entstehende Wasserdampf durch die Entlüftungsöffnung entweicht,
- das Aufbringen eines Unterdruckes auf den Behälter in einer Vakuumkammer zur wenigstens teilweisen Entfernung des Wasserdampfes und
- die Aufhebung des Unterdrucks indem ein Schutzgas aus einem Vorratsbehälter in die Vakuumkammer und in den Behälter durch die Entlüftungsöffnung gesaugt wird.

Durch das Aufbringen eines Unterdruckes auf den Behälter kann der Wasserdampf und auch die neben dem Wasserdampf vorhandene Restatmosphäre aus dem Behälter zumindest teilweise entfernt werden, ohne dass irgendein Gegenstand in den Behälter eingeführt wird. Ein zusätzlicher Gegenstand stellt in der Nahrungsmittelindustrie stets eine potentielle Quelle für Verunreinigungen dar. Da die Sterilität in der Nahrungsmittelindustrie von grosser Wichtigkeit ist, gilt es jeden unnötigen Kontakt eines Gegenstandes mit dem Nahrungsmittel oder diesen aufbewahrenden Behälter zu meiden. Das Schutzgas wird in den Behälter durch einen Sog hineingesaugt. Der Sog wiederum ist das Ergebnis eines Unterdruckes, welcher mithilfe einer Vakuumpumpe erzeugt wird. Als Resultat dieses Verfahrens enthält der Behälter Schutzgas ohne mit einem fremden Körper in Kontakt gekommen zu sein. Die Verwendung von Mikrowellen für das Dampfgaren und Pasteurisieren ermöglicht wiederum kurze Prozesszeiten zu erreichen, was zu einem grossen Vorteil in der industriellen Abfertigung und der sensorischen Qualität führt. Bevorzugt ist es, wenn das Verfahren vollautomatisiert ist. Grundsätzlich ist es auch möglich, das Verfahren in einem manuellen System (Standmikrowellengeräte und Vakuummaschine) oder einem halbautomatischen System durchzuführen. Im Rahmen dieser Patentanmeldung ist unter einem Behälter eine für Lebensmittel geeignete Verpackung zu verstehen, welche auch wiederverschliessbar sein kann. Die Verpackung kann nicht abschliessend eine Schale, ein Beutel oder ein Teller mit einer entsprechenden Abdeckung sein.

Als zweckdienlich hat es sich erwiesen, wenn die Vakuumkammer während des Aufbringens des Unterdruckes und der Aufhebung des Unterdruckes gekühlt wird. Damit wird die Dampf-Entwicklung aus dem Produkt reduziert.

Zweckmässigerweise wird das Schutzgas in die Vakuumkammer gesaugt, indem nach Erreichen eines Soll-Unterdrucks bzw. dem Austritt einer Soll-Dampfmenge die Vakuumpumpe der Vakuumkammer ausgeschaltet wird und ein Ventil in der Versorgungsleitung zwischen dem Vorratsbehälter und der Vakuumkammer geöffnet wird. Die Einführung von Schutzgas in die Vakuumkammer bei Vorliegen eines Unterdruckes führt zu einer schnellen und gleichmässigen Ausbreitung des Schutzgases in der Vakuumkammer. Um eine industrielle Automation zu ermöglichen, müssen Standartwerte eingeführt werden, welche als Parameter für die Steuerung herangezogen werden können. So kann aufgrund der ausgetretenen Dampfmenge auf einen Unterdruck geschlossen werden. Dieser wiederum dient als Parameter für das Abschalten der Vakuumpumpe und dem Öffnen des Ventils des Vorratsbehälters. Die Steuerung des Ventils des Vorratsbehälters kann in Abhängigkeit des Zustandes der Vakuumpumpe geregelt werden.

Die Erfindung zeichnet sich auch bevorzugt dadurch aus, dass der Soll-Unterdruck zwischen 200 und 800 mbar und besonders bevorzugt zwischen 300 und 700 mbar liegt.

Auch wenn in der Vakuumkammer ein Unterdruck herrscht, wird ausserhalb der Vakuumkammer der atmosphärische Umgebungsdruck herrschen. Um das Fördern des Behälters aus der Vakuumkammer so einfach wie möglich zu gestalten, muss der Druckunterschied nach abgeschlossenem Durchgang des Verfahrens so klein wie möglich sein. So erfolgt in einer weiteren bevorzugten Ausführungsform des Verfahrens das Fluten der Vakuumkammer mit Schutzgas bis zum Umgebungsdruck. Durch das Nicht-Überschreiten des Umgebungsdruckes kann auch auf kostspielige Sicherheitsvorkehrungen für die Installation der Leitungen und des Vorratsbehälters verzichtet werden.

Vorzugsweise benötigt das Fluten der Vakuumkammer eine Zeit zwischen 1 und 30 Sekunden und bevorzugt zwischen 2 und 10 Sekunden.

Nachdem der Wasserdampf aus dem Behälter gefördert und das Schutzgas in den Behälter gesaugt wurde, gilt es den Rückfluss in beide Richtungen zu verhindern. Dies wird durch das Anbringen eines Klebeetiketts erreicht. Bevorzugt wird die Entlüftungsöffnung mit einem Klebeetikett verschlossen.

In einer zweckdienlichen Ausführung des Verfahrens ist eine Etikettiervorrichtung zum Anbringen des Klebeetiketts in der Vakuumkammer angeordnet. Dies ermöglicht aufgrund des kurzen Weges der Etikettiervorrichtung zum Behälter das schnelle Anbringen des Klebeetiketts.

In einer anderen bevorzugten Ausführung des Verfahrens ist eine Etikettiervorrichtung zum Anbringen des Klebeetiketts ausserhalb der Vakuumkammer angeordnet. Die Etikettiervorrichtung ausserhalb der Vakuumkammer bringt den Vorteil mit sich, dass die Etikettiervorrichtung nicht den Druckschwankungen in der Vakuumkammer ausgesetzt ist und deshalb eine einfache Konstruktion aufweisen kann. Beim Ausgang aus der Vakuumkammer kann eine Druckschleuse vorgesehen sein, damit der Unterdruck in der Vakuumkammer nicht verloren geht. Die Etikettiervorrichtung kann auch in dieser Druckschleuse angeordnet sein.

Bevorzugt ist der Behälter eine Schale, auf welche eine Deckfolie aufgesiegelt wird, nachdem die Schale mit Lebensmitteln befüllt wurde. Die Schale weist eine Form auf, welche sich sowohl für das Aufnehmen eines grossen Volumens als auch durch die Möglichkeit des Ineinander-Stapelns für das Lagern eignet. Die Schale kann unterschiedlich gestaltet sein und mehrere Kammern, beispielsweise 2 oder 3 Kammern, haben. Die Kammern können bei dem vorliegenden Verfahren untereinander offen sein und müssen durch das Aufschweissen der Deckelfolie am Trennsteg der Kammern nicht voneinander getrennt werden. Im Gegensatz dazu muss bei der Verwendung einer Kanüle, jede Kammer separat begast werden, um eine ausreichende Spülung jeder Kammer mit Schutzgas zu erzielen. Es können auch unterschiedliche Verpackungsmaterialien, die für den Einsatz in der Mikrowelle geeignet sind, verwendet werden. Die Möglichkeit unterschiedliche Schalen verwenden zu können, erleichtert die technische Umsetzung des vorliegenden Verfahrens.

Die Entlüftungsöffnung kann auf unterschiedliche Weise an der Deckelfolie angebracht werden. Bevorzugt wird die Entlüftungsöffnung in die Deckelfolie geschmolzen oder in Gestalt eines Schnittes geschnitten. Der Schnitt kann zum Beispiel in Gestalt eines Kreuzschnittes oder halbmondförmig realisiert sein. Vorstellbar ist aber auch, dass die Öffnung gestanzt oder durch Laserperforation hergestellt wird. Die Entlüftungsvorrichtung kann auch eine mechanische Vorrichtung, beispielsweise ein Ventil, sein.

Als zweckdienlich hat es sich erwiesen, wenn die Deckelfolie eine erste dem Behälter zugewandte Schicht und eine zweite dem Behälter abgewandte Schicht aufweist, wobei die zweite Schicht aus Polypropylen besteht. Dies ermöglicht die Einhaltung von Verpackungsverordnungen für recyclingfähige Verpackungen.

In der bevorzugten Ausführungsform, in welcher die Deckelfolie zwei Schichten aufweist, ist die erste Schicht ein CPP (gerecktes Polypropylen) und die zweite Schicht ein OPP (gestrecktes Polypropylen).

Zweckmässigerweise wird die Versiegelung der Deckelfolie mit der Schale mit einer Siegeltemperatur zwischen 160 °C und 180 °C und bevorzugt zischen 165 °C und 175 °C versiegelt.

In einer anderen bevorzugten Ausführungsform ist die zweite Schicht ein PET (Polyethylenterephthalat) oder ein PA (Polyamid). Denkbar ist auch die Verwendung von Verpackungsmaterialien aus CPET/PET oder folienbeschichteten Kartonverpackungen für die zweite Schicht.

In einer weiteren bevorzugten Ausführungsform wird die Versiegelung der Deckelfolie mit der Schale mit einer Siegeltemperatur zwischen 180 °C und 210 °C und bevorzugt zischen 190 °C und 200 °C versiegelt.

Bevorzugt wird als Schutzgas N2 oder CO2 oder eine Mischung aus N2 und CO2 verwendet. Vorstellbar ist auch, dass Argon als Schutzgas verwendet wird.

Zweckmässigerweise erfolgt die Erhitzung durch Mikrowellen in einem Mikrowellentunnel. Damit wird zugleich die Bedingung für die industrielle Verwendung erfüllt. Denn das Erhitzen des Behälters in einem Mikrowellentunnel ermöglicht eine fortwährende Förderung von Behältern auf einer Transportvorrichtung. Der Mikrowellentunnel ist bevorzugt derart gestaltet, dass er durch individuelle Regelung die produktspezifischen Koch- und Pasteurisationseigenschaften hinsichtlich der thermischen Bedürfnisse erfüllt.

In einer weiteren bevorzugten Ausführung wird der Behälter auf einer Transportvorrichtung durch den Mikrowellentunnel und die Vakuumkammer bewegt.

Nach dem Verschliessen der Entlüftungsöffnung durchläuft der Behälter bevorzugt ein Kühlsystem mit einer Kühltemperatur zwischen -15 °C und -5 °C.

In einer bevorzugten Ausführungsform weist die Entlüftungsöffnung eine Ausdehnung von 1 bis 30 mm und besonders bevorzugt von 5 bis 12 mm auf.

### Kurzbeschreibung der Figuren

Weitere Vorteile und Merkmale ergeben sich aus der nachfolgenden Beschreibung eines Ausführungsbeispiels der Erfindung unter Bezugnahme auf die schematischen Darstellungen. Es zeigen in nicht massstabsgetreuer Darstellung:
- Figur 1:: eine Aufsicht eines Behälters mit einer Entlüftungsöffnung;
- Figur 2:: eine Seitenansicht des Behälters aus Figur 1 und
- Figur 3:: eine Darstellung des Ablaufs eines erfindungsmässigen Verfahrens.

### Detaillierte Beschreibung der Figuren

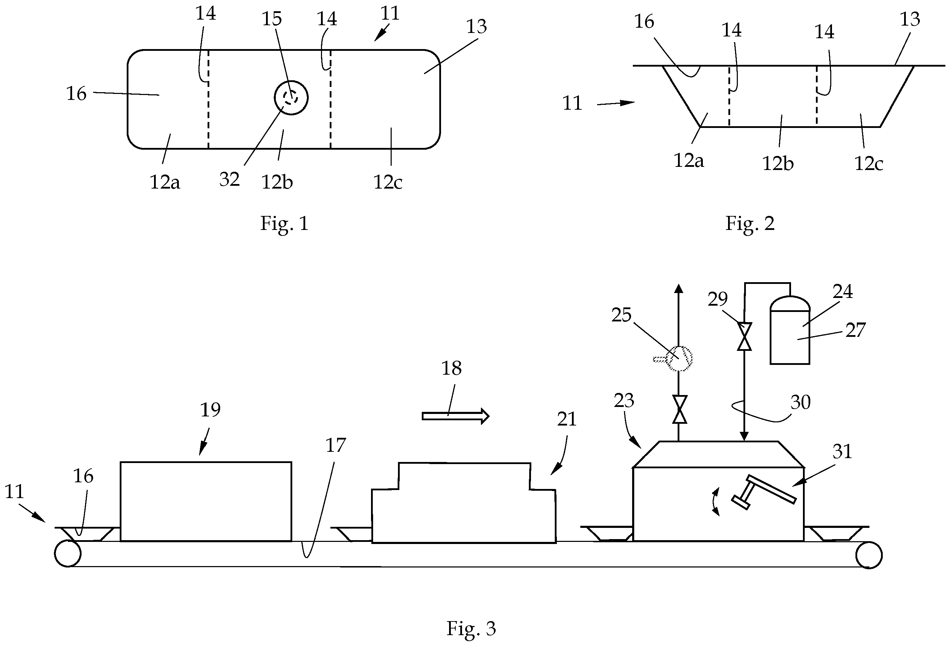

In Figur 1 ist ein Behälter 11 gezeigt, welcher der Aufnahme von Nahrungsmitteln dienen soll. Dies stellt eine Ausführung eines Behälters 11 dar, wie er im erfindungsgemässen Verfahren zur Verwendung kommt. Wie in der Figur 1 und 2 gezeigt, kann der Behälter auch 3 Kammern 12a,12b und 12c aufweisen, welche durch Trennstege 14 getrennt sind.

Der Behälter, welcher eine Schale 11 sein kann, weist eine Entlüftungsöffnung 15 auf, welche in Bezug auf den Behälter nicht massstabsgetreu abgebildet ist. Diese ist vorzugsweise an der Oberseite 13 des Behälters angebracht. Da es sich in Figur 1 um eine Aufsicht des Behälters 11 handelt, ist in dieser Figur die Entlüftungsöffnung 15 ebenfalls an der Oberseite 13 des Behälters angebracht.

Der Aufriss des Behälters 11 ist in dieser Darstellung als ein Rechteck mit abgerundeten Ecken gezeigt, kann aber auch eine beliebig andere Form aufweisen.

Die Figur 3 zeigt schematisch den Ablauf eines erfindungsmässigen Verfahrens. Als Transportvorrichtung für den Behälter 11 dient ein Förderband 17. Die Fördererrichtung 18 ist durch den Pfeil gezeigt. Der Behälter 11 durchläuft folgende drei Stationen nacheinander; eine Befüllungs- und Versiegelungsstation 19, einen Mikrowellentunnel 21 und eine Vakuumkammer 23.

In der ersten Station nimmt der Behälter 11 Nahrungsmittel auf. Diese können sowohl in rohem als auch in vorgekochtem Zustand vorliegen. Der mit Nahrungsmitteln gefüllte Behälter 11 wird mit einer Deckelfolie 16 abgedeckt und versiegelt. Die Deckelfolie 16 weist dabei eine Entlüftungsöffnung 15 auf. Diese stellt einen Zugang zwischen dem Innern und dem Äusseren des Behälters 11 her. Obwohl der Behälter 11 drei Kammern 12a,12b,12c aufweist ist eine einzige Entlüftungsöffnung 15 ausreichend, da die Kammern 12a,12b12c durch die Trennstege nicht vollständig voneinander getrennt sind und die Deckelfolie 16 nicht auf Trennstege aufgeschweisst wird.

In versiegeltem Zustand gelangt der Behälter 11 mit der Deckelfolie 16 in den Mikrowellentunnel 21. In diesem wird er einer Mikrowellen-Behandlung unterzogen, so dass die im Behälter 11 enthaltenen Nahrungsmittel erhitzt und dadurch gegart und pasteurisiert werden. Durch die Entlüftungsöffnung 15 gelangt der dabei im Behälter 11 entstehende Wasserdampf nach aussen. Vorteilhaft ist eine technische Ausführung der Vakuumkammer 23, bei welcher eine zusätzliche Vorrichtung für das Abführen der feuchten Luft, beispielsweise ein Kondensatabscheider, installiert ist.

Der Behälter 11 wird in die Vakuumkammer 23 gefördert, wobei noch Wasserdampf im Behälter 11 vorhanden ist. Dieser wird durch Anbringen eines Unterdruckes von 200-300 mbar in der Vakuumkammer 23 aus dem Behälter 11 entfernt. Der Unterdruck stellt sich aufgrund einer Vakuumpumpe 25 ein, welche die Luft inklusive des Wasserdampfes aus der Vakuumkammer 23 fördert. Nach Erreichen des gewünschten Unterdrucks wird die Vakuumkammer 23 mit einem Schutzgas 24 geflutet. Dieser ist in einem Vorratsbehälter 27 gelagert. Etwa gleichzeitig wird die Vakuumpumpe 25 abgeschaltet und der Behälter 11 saugt die ihn umgebende Luft ein. Da die Luft, welche den Behälter 11 umgibt, aus dem gefluteten Schutzgas 24 gebildet wird, gelangt das Schutzgas 24 auf passive Weise automatisch in den Behälter 11.

Für die Steuerung des Schutzgases 24 im Vorratsbehälter 27 ist ein Ventil 29 in der Versorgungsleitung 30 zwischen dem Vorratsbehälter 27 und der Vakuumkammer 23 vorgesehen. Der Zufluss des Schutzgases 24 in die Kammer 23 wird durch das Ventil 29 geregelt. Zugleich erlaubt dieser auch eine automatische Steuerung des Ventils 29. Nach Auffüllen des Behälters 11 wird die Entlüftungsöffnung 15 durch Anbringen eines Klebeetiketts 32 auf der Deckelfolie geschlossen. Dafür ist eine Etikettiervorrichtung 31 in der Vakuumkammer 23 angeordnet. Dieser verhindert somit den weiteren Austausch von Gasen zwischen dem Behälter 11 und der Kammer 23.

Nach Schliessen der Entlüftungsöffnung 15 wird der Behälter 11, wie es in Pasteurisationsprozessen üblich ist, in ein Schnellkühlsystem (nicht gezeigt) geführt.

### Legende:

- 11: Behälter, Schale
- 12a,12b,12c: Kammern
- 13: Oberseite des Behälters
- 14: Trennstege
- 15: Entlüftungsöffnung
- 16: Deckelfolie
- 17: Transportvorrichtung, Förderband
- 18: Förderrichtung
- 19: Befüllungs- und Versiegelungsstation
- 21: Mikrowellentunnel
- 23: Vakuumkammer
- 24: Schutzgas
- 25: Vakuumpumpe
- 27: Vorratsbehälter
- 29: Ventil
- 30: Versorgungsleitung
- 31: Etikettiervorrichtung
- 32: Klebeetikett

## Patentansprüche

1. Verfahren zum Haltbarmachen von Nahrungsmitteln in einem Behälter (11) mit einer Entlüftungsöffnung (15), in welchem das Lebensmittel verpackt und verkauft wird, umfassend die folgenden Verfahrensschritte:
- Abfüllen von feuchten Lebensmitteln, welche vorgekocht oder roh sein können,
- Dampfgaren und Pasteurisieren der Lebensmittel mit Mikrowelle, wobei der entstehende Wasserdampf durch die Entlüftungsöffnung (15) entweicht,
weiter **gekennzeichnet durch**
- Aufbringen eines Unterdruckes auf den Behälter (11) in einer Vakuumkammer (23) zur wenigstens teilweisen Entfernung des Wasserdampfes und
- Aufhebung des Unterdrucks indem ein Schutzgas (24) aus einem Vorratsbehälter (27) in die Vakuumkammer (23) und in den Behälter (11) durch die Entlüftungsöffnung (15) gesaugt wird.

2. Verfahren nach Anspruch 1, **dadurch gekennzeichnet, dass** die Vakuumkammer (23) während des Aufbringens des Unterdruckes und der Aufhebung des Unterdruckes gekühlt wird.

3. Verfahren nach Anspruch 1 oder 2, **dadurch gekennzeichnet, dass** das Schutzgas (24) in die Vakuumkammer (23) gesaugt wird, indem nach Erreichen eines Soll-Unterdrucks bzw. dem Austritt einer Soll-Dampfmenge die Vakuumpumpe (23) der Vakuumkammer (23) ausgeschaltet wird und ein Ventil (29) in der Versorgungsleitung (30) zwischen dem Vorratsbehälter (27) und der Vakuumkammer (23) geöffnet wird.

4. Verfahren nach Anspruch 3, **dadurch gekennzeichnet, dass** der Soll-Unterdruck zwischen 200 und 800 mbar und bevorzugt zwischen 300 und 700 mbar liegt.

5. Verfahren nach Anspruch 3 oder 4, **dadurch gekennzeichnet, dass** der Sollunterdruck in weniger als 10 sec und bevorzugt in weniger als 6 sec erreicht wird.

6. Verfahren nach einem der Ansprüche 1 bis 5, **dadurch gekennzeichnet, dass** das Fluten der Vakuumkammer (23) mit Schutzgas (24) bis zum Umgebungsdruck erfolgt.

7. Verfahren nach einem der Ansprüche 1 bis 6, **dadurch gekennzeichnet, dass** das Fluten der Vakuumkammer (23) eine Zeit zwischen 1 und 30 sec und bevorzugt zwischen 2 und 10 sec benötigt.

8. Verfahren nach einem der Ansprüche 1 bis 7, **dadurch gekennzeichnet, dass** die Entlüftungsöffnung (15) mit einem Klebeetikett (32) verschlossen wird.

9. Verfahren nach Anspruch 8, **dadurch gekennzeichnet, dass** in der Vakuumkammer (23) eine Etikettiervorrichtung (31) zum Aufbringen des Klebetiketts (32) angeordnet ist.

10. Verfahren nach Anspruch 8, **dadurch gekennzeichnet, dass** eine Etikettiervorrichtung (31) zum Aufbringen des Klebetiketts (32) ausserhalb der Vakuumkammer (23) angeordnet ist.

11. Verfahren nach einem der Ansprüche 1 bis 10, **dadurch gekennzeichnet, dass** der Behälter eine Schale (11) ist, auf welche eine Deckelfolie (16) aufgesiegelt wird, nachdem die Schale (11) mit den Lebensmitteln befüllt wurde.

12. Verfahren nach einem der Ansprüche 1 bis 11, **dadurch gekennzeichnet, dass** die Entlüftungsöffnung (15) in die Deckelfolie (16) geschmolzen oder in Gestalt eines Schnittes geschnitten wird.

13. Verfahren nach Anspruch 11 oder 12, **dadurch gekennzeichnet, dass** die Deckelfolie (16) eine erste dem Behälter zugewandte Schicht und eine zweite dem Behälter abgewandte Schicht aufweist, wobei die zweite Schicht aus Polypropylen besteht.

14. Verfahren nach Anspruch 13, **dadurch gekennzeichnet, dass** die erste Schicht ein CPP (gerecktes Polypropylen) und die zweite Schicht ein OPP (gestrecktes Polypropylen) ist.

15. Verfahren nach einem der Ansprüche 11 bis 14, **dadurch gekennzeichnet, dass** die Versiegelung der Deckelfolie (16) mit der Schale (11) mit einer Siegeltemperatur zwischen 160 °C und 180 °C und bevorzugt zwischen 165 °C und 175 °C versiegelt wird.

16. Verfahren nach einem der Ansprüche 11 bis 15, **dadurch gekennzeichnet, dass** die zweite Schicht ein PET (Polyethylenterephthalat) oder ein PA (Polyamid) ist.

17. Verfahren nach einem der Ansprüche 11 bis 16, **dadurch gekennzeichnet, dass** die Versiegelung der Deckelfolie (16) mit der Schale (11) mit einer Siegeltemperatur zwischen 180 °C und 210 °C und bevorzugt zwischen 190 °C und 200 °C versiegelt wird.

18. Verfahren nach einem der Ansprüche 1 bis 17, **dadurch gekennzeichnet, dass** als Schutzgas (24) N2 oder CO2 oder eine Mischung aus N2 und CO2 verwendet wird.

19. Verfahren nach einem der Ansprüche 1 bis 18, **dadurch gekennzeichnet, dass** die Erhitzung durch Mikrowellen in einem Mikrowellendurchlauftunnel (21) erfolgt.

20. Verfahren nach Anspruch 19, **dadurch gekennzeichnet, dass** der Behälter (11) auf einer Transportvorrichtung (17) durch den Mikrowellendurchlauftunnel (21) und die Vakuumkammer (23) bewegt wird.

21. Verfahren nach einem der Ansprüche 1 bis 20, **dadurch gekennzeichnet, dass** der Behälter (11) nach dem Verschliessen der Entlüftungsöffnung (15) ein Kühlsystem mit einer Kühltemperatur zwischen -15 °C und -5 °C durchläuft.

22. Verfahren nach einem der Ansprüche 1 bis 21, **dadurch gekennzeichnet, dass** die Entlüftungsöffnung (15) eine Ausdehnung von 1 bis 30 mm und bevorzugt von 5 bis 12 mm aufweist.

## Claims

1. Method for preservation of food products in a container (11) with a vent hole (15) in which the food product is packed and sold, comprising the following method steps:
- filling of wet food products that can be precooked or crude,
- steam cooking and pasteurization of the food products with microwave, wherein the water steam produced escapes through the vent hole,
further **characterized by**
- application of a vacuum to the container (11) in a vacuum chamber (23) for at least partially removing the steam and
- release of the vacuum, an inert gas (24) being sucked off out of a storage container (27) into the vacuum chamber (23) and into the container (11) through the vent hole (15).

2. Method according to claim 1, **characterized in that** the vacuum chamber (23) is cooled during the application of the vacuum and the release of the vacuum.

3. Method according to claim 1 or 2, **characterized in that** the inert gas (24) is sucked into the vacuum chamber (23), wherein the vacuum pump (23) of the vacuum chamber (23) is switched off after reaching a nominal vacuum or after the output of a nominal steam quantity and a valve (29) opens in the supply line (30) between the storage container (27) and the vacuum chamber (23).

4. Method according to claim 3, **characterized in that** the nominal vacuum is between 200 and 800 mbar and preferably between 300 and 700 mbar.

5. Method according to claim 3 or 4, **characterized in that** the nominal vacuum is reached in less than 10 seconds and preferably in less than 6 seconds.

6. Method according to one of the claims 1 to 5, **characterized in that** the flooding of the vacuum chamber (23) takes place with inert gas (24) to ambient pressure.

7. Method according to one of the claims 1 to 6, **characterized in that** the flooding of the vacuum chamber (23) requires a time between 1 and 30 seconds and preferably between 2 and 10 seconds.

8. Method according to one of the claims 1 to 7, **characterized in that** the vent hole (15) is closed with an adhesive label (32).

9. Method according to claim 8, **characterized in that** a labelling device (31) for applying the adhesive label (32) is placed in the vacuum chamber (23).

10. Method according to claim 8, **characterized in that** a labelling device (31) for applying the adhesive label (32) is placed outside the vacuum chamber (23).

11. Method according to one of the claims 1 to 10, **characterized in that** the container is a tray (11) onto which a lid foil (16) is sealed after the tray (11) has been filled with food products.

12. Method according to one of the claims 1 to 11, **characterized in that** the vent opening (15) is melt into the lid foil (16) or cut as a cut.

13. Method according to claim 11 or 12, **characterized in that** the lid foil (16) has a first layer facing the container and a second layer facing away from the container, wherein the second layer is made of polypropylene.

14. Method according to claim 13, **characterized in that** the first layer is a CPP (stretched polypropylene) and the second layer a OPP (oriented polypropylene).

15. Method according to one of the claims 11 to 14, **characterized in that** the sealing of the lid foil (16) with the tray (11) takes place with a sealing temperature between 160°C and 180°C and preferably between 165°C and 175°C.

16. Method according to one of the claims 11 to 15, **characterized in that** the second layer is a PET (polyethylene terephthalate) or a PA (polyamide).

17. Method according to one of the claims 11 to 16, **characterized in that** the sealing of the lid foil (16) with the tray (11) takes place with a sealing temperature between 180°C and 210°C and preferably between 190°C and 200°C.

18. Method according to one of the claims 1 to 17, **characterized in that** N2 or CO2 or a mixture of N2 and CO2 is used as an inert gas (24).

19. Method according to one of the claims 1 to 18, **characterized in that** the heating takes place by microwaves in a microwave through tunnel (21).

20. Method according to claim 19, **characterized in that** the container (11) is moved on a transport device (17) through the microwave through tunnel (21) and the vacuum chamber (23).

21. Method according to one of the claims 1 to 20, **characterized in that** the container (11) passes through a cooling system with a cooling temperature between -15°C and -5°C after the closing of the vent hole (15).

22. Method according to one of the claims 1 to 21, **characterized in that** the vent opening (15) has an extent of 1 to 30 mm and preferably of 5 to 12 mm.

## Revendications

1. Procédé pour conserver des aliments dans un contenant (11) avec une ouverture d'aération (15) dans lequel l'aliment est emballé et vendu qui comprend les étapes de procédé suivantes :
- remplissage d'aliments liquides qui peuvent être précuits ou crus,
- cuisson à la vapeur et pasteurisation d'aliments au micro-ondes, la vapeur d'eau qui se forme échappant par l'ouverture d'aération (15),
**caractérisé de plus par**
- l'application d'une dépression sur le contenant (11) dans une chambre sous vide (23) pour l'élimination au moins partielle de la vapeur d'eau et
- la suppression de la dépression, un gaz inerte (24) étant aspiré d'un réservoir (27) dans la chambre sous vide (23) et dans le contenant (11) par l'ouverture d'aération (15).

2. Procédé selon la revendication 1, **caractérisé en ce que** la chambre sous vide (23) est refroidie pendant l'application de la dépression et la suppression de la dépression.

3. Procédé selon la revendication 1 ou 2, **caractérisé en ce que** le gaz inerte (24) est aspiré dans la chambre sous vide (23), la pompe d'aspiration (23) de la chambre sous vide (23) étant mise hors circuit après avoir atteint une dépression nominale ou la sortie d'une quantité de vapeur nominale et une vanne (29) s'ouvrant dans la conduite d'alimentation (30) entre le réservoir (27) et la chambre sous vide (23).

4. Procédé selon la revendication 3, **caractérisé en ce que** la dépression nominale se situe entre 200 et 800 mbar et de préférence entre 300 et 700 mbar.

5. Procédé selon la revendication 3 ou 4, **caractérisé en ce que** la dépression nominale est atteinte en moins de 10 secondes et de préférence en moins de 6 secondes.

6. Procédé selon l'une des revendications 1 à 5, **caractérisé en ce que** le noyage de la chambre sous vide (23) se fait avec du gaz inerte (24) jusqu'à la pression environnante.

7. Procédé selon l'une des revendications 1 à 6, **caractérisé en ce que** le noyage de la chambre sous vide (23) nécessite un temps entre 1 et 30 secondes et de préférence entre 2 et 10 secondes.

8. Procédé selon l'une des revendications 1 à 7, **caractérisé en ce que** l'ouverture d'aération (15) est fermée avec une étiquette adhésive (32).

9. Procédé selon la revendication 8, **caractérisé en ce qu'**un dispositif d'étiquetage (31) pour appliquer l'étiquette adhésive (32) est placé dans la chambre sous vide (23).

10. Procédé selon la revendication 8, **caractérisé en ce qu'**un dispositif d'étiquetage (31) pour appliquer l'étiquette adhésive (32) est placé hors de la chambre sous vide (23).

11. Procédé selon l'une des revendications 1 à 10, **caractérisé en ce que** le contenant est une barquette (11) sur laquelle une pellicule de couverture (16) est scellée après que la barquette (11) ait été remplie d'aliments.

12. Procédé selon l'une des revendications 1 à 11, **caractérisé en ce que** l'ouverture d'aération (15) est fondue dans la pellicule de couverture (16) ou est découpée sous forme d'une coupe.

13. Procédé selon la revendication 11 ou 12, **caractérisé en ce que** la pellicule de couverture (16) présente une première couche tournée vers le contenant et une seconde couche opposée au contenant, la seconde couche étant en polypropylène.

14. Procédé selon la revendication 13, **caractérisé en ce que** la première couche est un CPP (polypropylène étiré) et la seconde couche un OPP (polypropylène orienté).

15. Procédé selon l'une des revendications 11 à 14, **caractérisé en ce que** le scellement de la pellicule de couverture (16) avec la barquette (11) est scellé avec une température de scellement entre 160°C et 180°C et de préférence entre 165°C et 175°C.

16. Procédé selon l'une des revendications 11 à 15, **caractérisé en ce que** la seconde couche est un PET (polyéthyléntéréphthalate) ou un PA (polyamide).

17. Procédé selon l'une des revendications 11 à 16, **caractérisé en ce que** le scellement de la pellicule de couverture (16) avec la barquette (11) est scellé avec une température de scellement entre 180°C et 210°C et de préférence entre 190°C et 200°C.

18. Procédé selon l'une des revendications 11 à 17, **caractérisé en ce que** du N2 ou du CO2 ou un mélange de N2 et de CO2 est utilisé comme gaz inerte (24).

19. Procédé selon l'une des revendications 11 à 18, **caractérisé en ce que** le chauffage se fait par des micro-ondes dans un tunnel de passage en continu à micro-ondes (21).

20. Procédé selon la revendication 19, **caractérisé en ce que** le contenant (11) est déplacé sur un dispositif de transport (17) à travers le tunnel de passage en continu à micro-ondes (21) et la chambre sous vide (23).

21. Procédé selon l'une des revendications 1 à 20, **caractérisé en ce que** le contenant (11) traverse, après la fermeture de l'ouverture d'aération (15), un système de refroidissement avec une température de refroidissement entre - 15°C et -5°C.

22. Procédé selon l'une des revendications 1 à 21, **caractérisé en ce que** l'ouverture d'aération (15) présente une extension de 1 à 30 mm et de préférence de 5 à 12 mm.
